# EUROPEAN PATENT SPECIFICATION

(11) **EP 4 561 048 B1**
(45) Date of publication and mention of the grant of the patent: **01.04.2026**
(21) Application number: 24209438.1
(22) Date of filing: 29.10.2024
(51) Int. Cl.: H04N 1/38, G06T 5/77, G06T 7/00, H04N 1/40

(54) **IMAGE PROCESSING APPARATUS, IMAGE PROCESSING METHOD, AND CARRIER MEDIUM**
BILDVERARBEITUNGSVORRICHTUNG, BILDVERARBEITUNGSVERFAHREN UND TRÄGERMEDIUM
APPAREIL DE TRAITEMENT D'IMAGE, PROCÉDÉ DE TRAITEMENT D'IMAGE ET SUPPORT

(30) Priority: 24.11.2023 JP 2023199341
(43) Date of publication of application: 28.05.2025
(73) Proprietor: Ricoh Company, Ltd., Tokyo 143-8555 (JP)
(72) Inventor: Takano, Ryoichi, Tokyo, 105-8503 (JP)
(74) Representative: Marks & Clerk LLP

(56) References cited:
- CN-A- 116 993 723
- JP-A- 2013 202 788
- US-A1- 2018 196 890

## Description

### BACKGROUND

### Technical Field

The present disclosure relates to an image processing apparatus, an image processing method, and a carrier medium.

### Related Art

A technique for printing an image that reproduces existing wallpaper is known in order to remove a stain or repair a scratch on the wallpaper. For example, Japanese Unexamined Patent Application Publication No. 2013-202788 discloses a printing apparatus that can print an image directly on an area where it is not possible to print an image by feeding a piece of sheet, such as a scratch on the wallpaper in a house. The printing apparatus disclosed in Japanese Unexamined Patent Application Publication No. 2013-202788 processes an image that includes a print target area of a print target object and a marker attached to the print target object to generate print data, and based on the print data, executes printing in the print target area of the print target object with reference to the position of the marker.

However, the technology in the art does not take into consideration the aging deterioration that occurs in wallpaper that has been used for many years. When a part of the wallpaper in which the aging deterioration has occurred is replaced with new wallpaper, a difference due to the aging deterioration is easily visible, sometimes resulting in an unnatural appearance that causes a sense of incongruity.

### SUMMARY

In one aspect, an image processing apparatus includes an acquisition unit to acquire a first image obtained by imaging wallpaper and measurement information obtained by measuring the wallpaper, an analysis unit to analyze deterioration of the wallpaper based on the measurement information, and a generation unit to generate a second image by removing the deterioration from the first image.

In another aspect, an image processing method includes acquiring a first image obtained by imaging wallpaper and measurement information obtained by measuring the wallpaper, analyzing deterioration of the wallpaper based on the measurement information, and generating a second image by removing the deterioration from the first image.

In another aspect, a carrier medium carries computer readable code for controlling a computer system to carry out a method including acquiring a first image obtained by imaging wallpaper and measurement information obtained by measuring the wallpaper, analyzing deterioration of the wallpaper based on the measurement information, and generating a second image by removing the deterioration from the first image.

According to an embodiment of the present disclosure, an image of wallpaper that harmonizes with existing wallpaper can be generated.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating a scene of the use of printed material according to an embodiment of the present disclosure;
FIG. 2 is a diagram illustrating another scene of the use of printed material according to an embodiment of the present disclosure;
FIG. 3 is a diagram illustrating still another scene of the use of printed material according to an embodiment of the present disclosure;
FIG. 4 is a diagram illustrating an overall configuration of a printing system according to an embodiment of the present disclosure;
FIG. 5 is a perspective view of the inside of a printing apparatus according to an embodiment of the present disclosure;
FIG. 6 is a top view of a configuration of a printing apparatus according to an embodiment of the present disclosure;
FIG. 7 is a diagram illustrating a configuration of a carriage according to an embodiment of the present disclosure;
FIG. 8 is a side view of a configuration of a printing apparatus according to an embodiment of the present disclosure;
FIG. 9 is a block diagram illustrating a hardware configuration of a control apparatus according to an embodiment of the present disclosure;
FIG. 10 is a block diagram illustrating a hardware configuration of a computer according to an embodiment of the present disclosure;
FIG. 11 is a block diagram illustrating a functional configuration of a printing system according to an embodiment of the present disclosure;
FIG. 12 is a block diagram illustrating functional configurations of an analysis unit, a learning unit, and a generation unit, according to an embodiment of the present disclosure;
FIG. 13 is a diagram illustrating a deterioration amount calculation rule according to an embodiment of the present disclosure;
FIG. 14 is a sequence diagram illustrating a method for manufacturing wallpaper according to an embodiment of the present disclosure;
FIG. 15 is a flowchart of an analysis process according to an embodiment of the present disclosure;
FIG. 16 is a flowchart of a learning process according to an embodiment of the present disclosure; and
FIG. 17 is a flowchart of a generation process according to an embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described in detail below with reference to the drawings. In the description of the drawings, the same elements are denoted by the same reference numerals, and redundant descriptions thereof are omitted.

In an embodiment of the present disclosure, a printing system that can be used for manufacturing wallpaper is described. The printing system according to the present embodiment has a function to print an image of wallpaper that reproduces existing wallpaper. The wallpaper on which an image is printed by the printing system of the present embodiment can be used, for example, to repair existing wallpaper.

It is known that aging deterioration occurs in wallpaper that has been used for many years. The aging deterioration of the wallpaper includes, for example, deterioration due to irradiation of ultraviolet light (also referred to as "ultraviolet deterioration" in the following description) and deterioration due to wear (also referred to simply as "wear deterioration" in the following description). Examples of the ultraviolet deterioration include discoloration due to sunburn and surface hardening due to heat. The wear deterioration includes, for example, stains and damage. Examples of the stains include stains due to fingerprints, mold, stains due to cigarette smoke, and stains due to cooking oil or seasoning. Examples of the damage include a cut caused by a sharp object such as a knife and deformation caused by close contact with furniture or other objects.

When wallpaper is used for many years, for example, a stain or a scratch that requires repair may occur on the wallpaper. In this case, if only the area where a stain or a scratch occurs is repaired, a difference due to aging deterioration appears between the area where the wallpaper is newly pasted for repair and the other areas that are not repaired. In particular, at the boundaries between the repaired area and the other areas, color change due to aging deterioration is easily visible, often resulting in an unnatural appearance that causes a sense of incongruity.

In the case of repairing wallpaper, one method is to prepare the same type of wallpaper as the existing wallpaper and then replace the entire existing wallpaper. Another method is to cut out an inconspicuous part of the existing wallpaper and paste the cut part in the area to be repaired. As disclosed in Japanese Unexamined Patent Application Publication No. 2013-202788, still another method is to use a printing apparatus that can print an image directly on an area where it is not possible to print an image by feeding a piece of sheet, such as a scratch on the wallpaper in a house. However, according to the technique in the art, at the boundaries between the repaired area and the other areas, color change due to aging deterioration is easily visible, often resulting in an unnatural appearance that causes a sense of incongruity. Accordingly, it is not possible to make a repair with wallpaper that harmonizes with the old wallpaper having aging deterioration.

The present embodiment aims to harmonize wallpaper to be used for repair with the surrounding old wallpaper. For this purpose, in the present embodiment, the deterioration of the wallpaper is analyzed based on measurement information obtained by measuring the existing wallpaper, and the deterioration is removed from an image obtained by imaging the existing wallpaper. Further, in the present embodiment, the tendency of deterioration is learned based on the measurement information, and a deterioration pattern generated based on the tendency of deterioration is added to the image.

In one aspect, according to the present embodiment, wallpaper that harmonizes with existing wallpaper is manufactured. In another aspect, according to the present embodiment, since the wallpaper can be repaired by replacing a part of the wallpaper on a wall, without having to replace the entire wallpaper, the amount of wallpaper required for the repair is reduced.

### Scene of Use

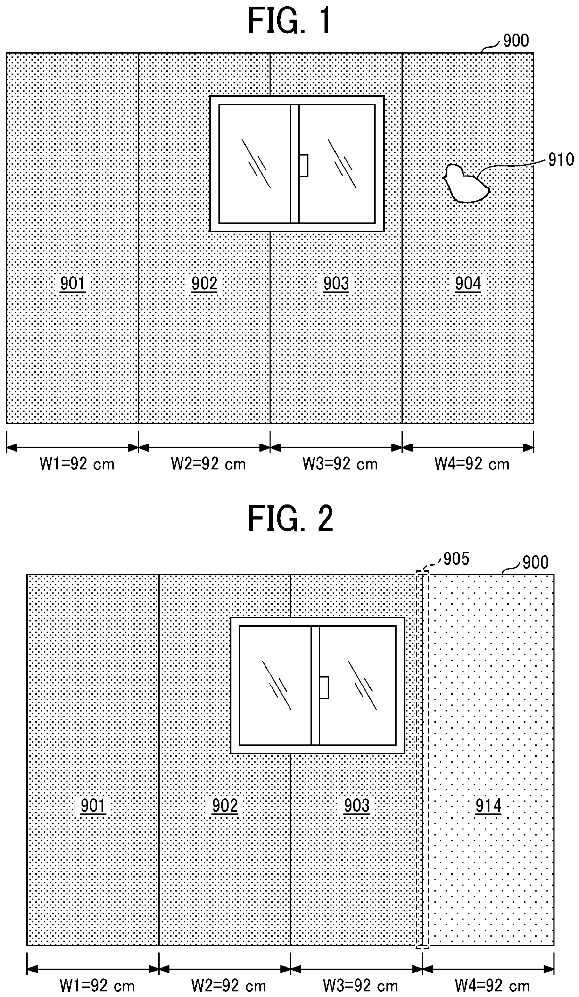

With reference to FIGS. 1 to 3, scenes of the use of printed material in the present embodiment are described below. FIGS. 1 to 3 are diagrams each illustrating a scene of the use of printed material according to an embodiment of the present disclosure.

FIG. 1 is a diagram illustrating the state of a wall in which a part of wallpaper has been worn. As illustrated in FIG. 1, when wallpaper is pasted on a wall 900 of a house, a plurality of pieces of wallpaper 901 to 904 is arranged and pasted side by side in units of a repeat so as to fit the width of the wall 900. The repeat is a certain interval at which the same design is repeated. In the case illustrated in FIG. 1, pieces of wallpaper with the design repeated at 92 cm intervals are used.

When a person lives in a house with wallpaper for many years, aging deterioration such as discoloration due to sunburn, stains, or scratches occurs on the entirety of the wall 900 (i.e., all the wallpaper 901 to 904). In this case, if a part of the wallpaper has been significantly worn, the wallpaper may need to be repaired. In the case illustrated in FIG. 1, the wallpaper 904 has a scratch 910 that is large in size. In this case, it is possible to replace all the wallpaper 901 to 904. However, there are cases where the person does not want to replace all the wallpaper for various reasons. Examples of such reasons include a high cost of materials or labor, or a preference for the existing wallpaper.

FIG. 2 is a diagram illustrating the state of the wall in which only the piece of the wallpaper having the wear is replaced. As illustrated in FIG. 2, when only the wallpaper 904 having the scratch 910 is newly replaced with wallpaper 914, a difference due to the existence of aging deterioration is recognizable at a boundary 905 between the wallpaper 901 to 903 not replaced and the wallpaper 914 newly pasted.

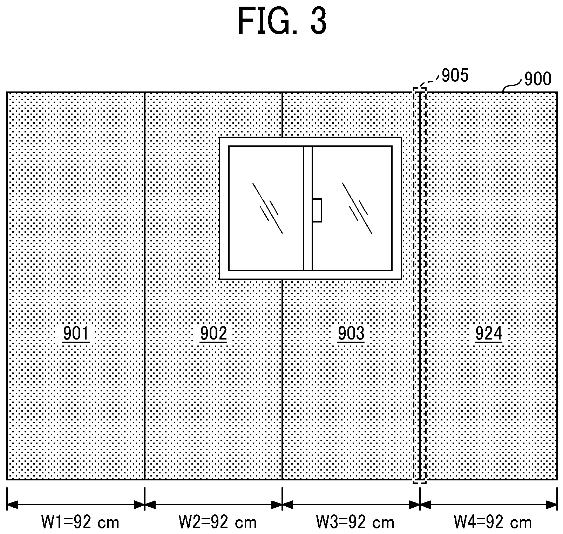

In this case, if the existing wallpaper is replaced with wallpaper that reproduces the deterioration of the existing wallpaper, the sense of incongruity can be reduced. FIG. 3 is a diagram illustrating the state of the wall in which the existing wallpaper is replaced with wallpaper reproducing the deterioration. As illustrated in FIG. 3, when the wallpaper 904 having the scratch 910 is replaced with wallpaper 924 reproducing the deterioration, even at the boundary 905 between the wallpaper 901 to 903 not replaced and the wallpaper 924 newly pasted, the difference due to the existence of the aging deterioration is not recognizable, and the finish of the wallpaper does not cause a sense of incongruity.

In the present embodiment, a part of the existing wallpaper 901 to 904 is measured. Then, an image of the wallpaper 924 reproducing the deterioration of the existing wallpaper 901 to 904 is printed based on the result obtained by analyzing the deterioration according to the measurement information. In FIGS. 1 to 3, the cases where the wallpaper is replaced in units of a repeat are illustrated. However, the unit for replacing the wallpaper is not limited to the units of a repeat. In the present embodiment, if the area where wallpaper is replaced can be specified, it is possible to print an image of wallpaper reproducing the deterioration for any area as a unit.

### Overall Configuration of Printing System

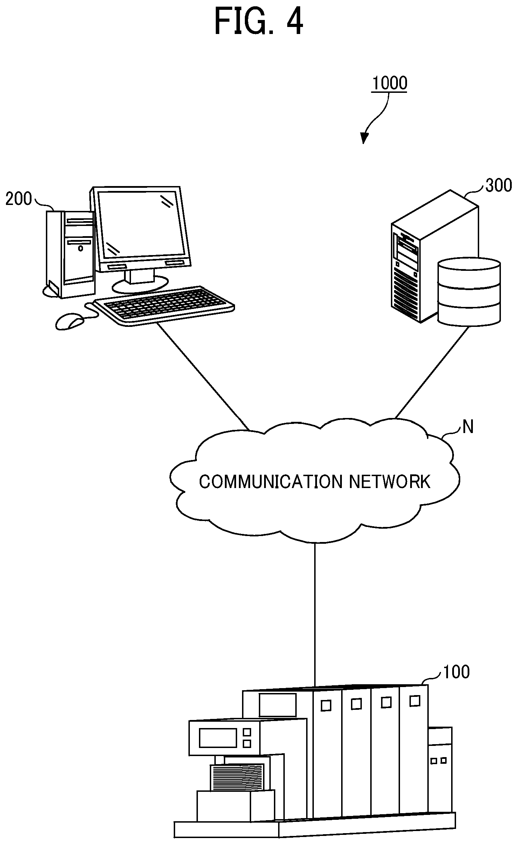

With reference to FIG. 4, an overall configuration of the printing system according to the present embodiment is described below. FIG. 4 is a diagram illustrating an overall configuration of the printing system according to an embodiment of the present disclosure.

As illustrated in FIG. 4, a printing system 1000 includes a printing apparatus 100, a scanning apparatus 200, and an image processing apparatus 300. The printing apparatus 100, the scanning apparatus 200, and the image processing apparatus 300 are connected to a communication network N. The communication network N enables the connected apparatuses to communicate with one another.

The communication network N is implemented by, for example, a wired communication network such as the Internet, a local area network (LAN), or a wide area network (WAN). The communication network N may include not only the wired communication network but also a wireless communication network such as a wireless LAN or a short-range wireless communication, or a mobile communication network such as Worldwide Interoperability for Microwave Access (WiMAX), Long Term Evolution (LTE), or the fifth generation (5G).

The printing apparatus 100 is an example of an image forming apparatus that can print an image on wallpaper. The printing apparatus 100 may be a liquid discharge apparatus that discharges liquid from a head onto a print medium conveyed in the conveyance direction to form an image on the print medium. The printing apparatus 100 is, for example, an inkjet printer or the like.

The printing apparatus 100 prints an image of the wallpaper on the print medium based on a print job received from the image processing apparatus 300. The printing apparatus 100 may include a mechanism for forming deterioration on the printed wallpaper.

The scanning apparatus 200 is an example of an electronic apparatus that measures wallpaper to be repaired (also referred to as "target wallpaper" in the following description). The scanning apparatus 200 may be a computer such as a personal computer, a smartphone, or a tablet terminal.

To the scanning apparatus 200, a measuring device in accordance with the physical quantity of an object to be measured may be connected via an interface using wired or wireless communication. To the scanning apparatus 200, for example, an image scanner that can measure the amount of light (or the amount of ultraviolet light) irradiated to the wallpaper (the surface of the wallpaper) may be connected. Furthermore, for example, to the scanning apparatus 200, a three-dimensional laser scanner that can measure the unevenness of the wallpaper (the surface of the wallpaper) may be connected.

The scanning apparatus 200 generates an image representing the imaged wallpaper (an example of the first image, which may be also referred to as a "wallpaper image" in the following description) and measurement information by measuring the wallpaper, and transmits the image and the measurement information to the image processing apparatus 300. The measurement information may include ultraviolet information and unevenness information. The ultraviolet information is information indicating the amount of ultraviolet light irradiated to the wallpaper. The unevenness information is information obtained by measuring the unevenness of the wallpaper.

The image processing apparatus 300 is an example of an information processing apparatus that generates an image to be printed on the wallpaper (an example of the second image, may be also referred to as a "print image"). The image processing apparatus 300 may be, for example, a computer such as a personal computer, a workstation, or a server.

The image processing apparatus 300 analyzes the deterioration of the wallpaper based on the measurement information received from the scanning apparatus 200, and generates an image (another example of the second image, which may be also referred to as a "reproduced wallpaper image" in the following description) obtained by removing the deterioration from the wallpaper image received from the scanning apparatus 200. The image processing apparatus 300 learns the tendency of deterioration based on the measurement information, and generates a print image by adding deterioration to the reproduced wallpaper image based on the tendency of deterioration. The image processing apparatus 300 transmits a print job including the print image to the printing apparatus 100.

The scanning apparatus 200 and the image processing apparatus 300 are not limited to information processing apparatuses as long as the apparatuses have a communication function. Other examples of the scanning apparatus 200 and the image processing apparatus 300 include, but are not limited to, an output device such as a projector, an interactive whiteboard (an electronic whiteboard having mutual communication capability), or digital signage, a head-up display (HUD), an industrial machine, an image capturing device, a sound collecting device, a medical device, a network home appliance, an automobile (connected car), a laptop personal computer (PC), a mobile phone, a smartphone, a tablet terminal, a game console, a personal digital assistant (PDA), a digital camera, a wearable PC, and a desktop PC.

The overall configuration of the printing system 1000 illustrated in FIG. 4 is given by way of example, and various system configurations may be employed depending on applications and purposes. For example, in the printing system 1000, a plurality of one or more of the printing apparatus 100, the scanning apparatus 200, and the image processing apparatus 300 may be included. For example, the image processing apparatus 300 may be implemented by multiple computers or may be implemented as a cloud computing service. The divisions of the apparatuses such as the printing apparatus 100, the scanning apparatus 200, and the image processing apparatus 300 illustrated in FIG. 4 are given by way of example.

### Hardware Configuration of Printing Apparatus

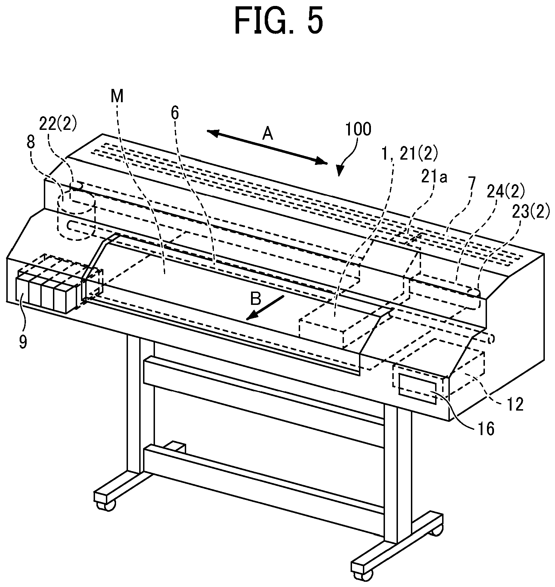

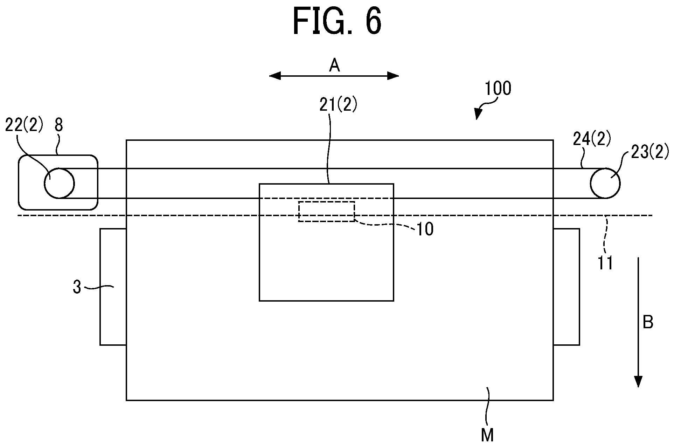

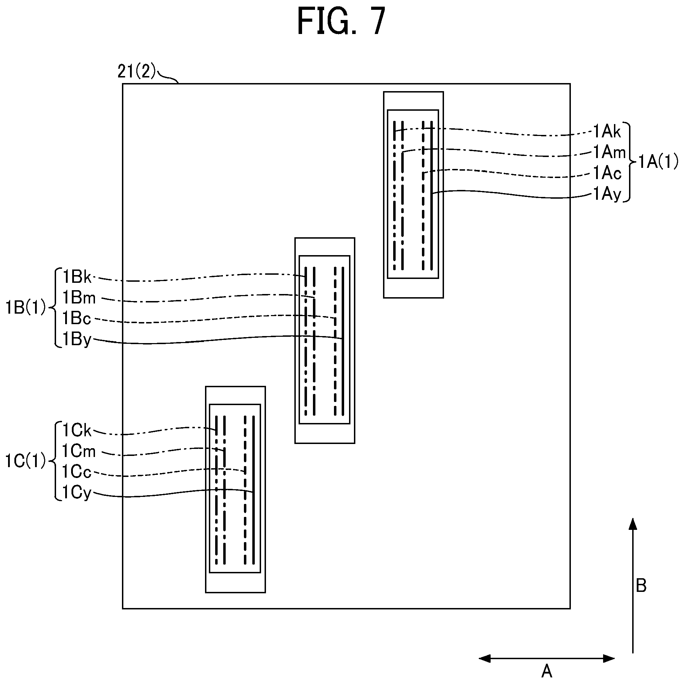

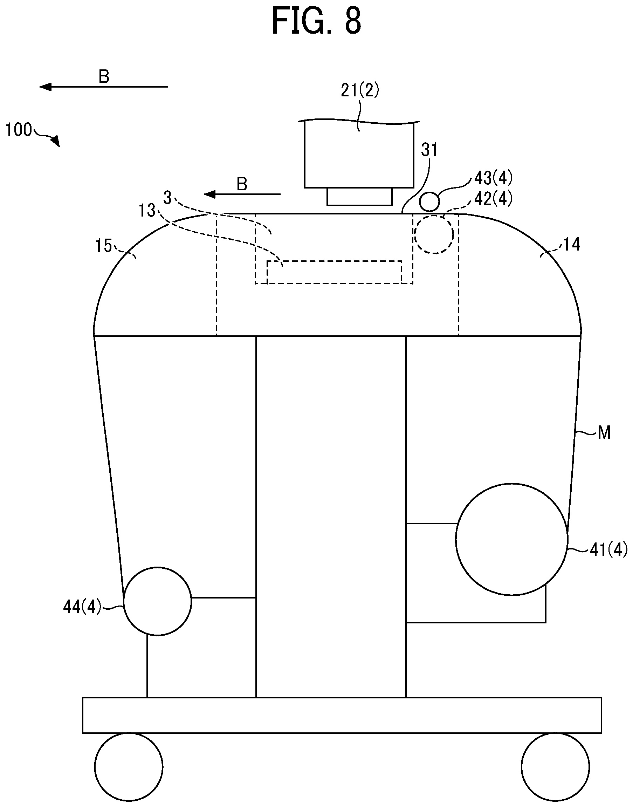

With reference to FIGS. 5 to 8, a hardware configuration of the printing apparatus according to the present embodiment is described below. FIG. 5 is a perspective view of the inside of the printing apparatus according to an embodiment of the present disclosure. FIG. 6 is a top view of a configuration of the printing apparatus according to an embodiment of the present disclosure. FIG. 7 is a diagram illustrating a configuration of a carriage included in the printing apparatus according to an embodiment of the present disclosure. FIG. 8 is a side view of a configuration of the printing apparatus according to an embodiment of the present disclosure.

As illustrated in FIGS. 5 to 8, the printing apparatus 100 includes a head 1, a first movement mechanism 2, a receptacle 3, a second movement mechanism 4, a light 5, and an operation panel 16.

The printing apparatus 100 is, for example, a serial type image forming apparatus that forms an image on a print medium M using ink, which is given by way of example as liquid. The printing apparatus 100 causes the second movement mechanism 4 to intermittently convey the print medium M in a second direction B. While the conveyance of the print medium M is stopped, the printing apparatus 100 causes the first movement mechanism 2 to move the head 1 forward and backward alternately in a first direction A and discharges the ink from the head 1 onto the print medium M on the receptacle 3. Thus, the printing apparatus 100 forms an image on the print medium M.

The first movement mechanism 2 includes a carriage 21, a driving pulley 22, a driven pulley 23, and a timing belt 24, and relatively moves the head 1 and the print medium M in the first direction A.

The carriage 21 relatively moves the print medium M and the head 1 in the first direction A. As illustrated in FIG. 5, the carriage 21 is supported by a main guide rod 6 extending in the first direction A and reciprocates in the first direction A. The carriage 21 includes a coupler 21a. The coupler 21a is engaged with a sub-guide 7 disposed parallel to the main guide rod 6 to stabilize the posture of the carriage 21.

The carriage 21 is coupled to the timing belt 24 stretched between the driving pulley 22 and the driven pulley 23. The driving pulley 22 is rotated by the driving of a first motor 8. The driven pulley 23 includes a mechanism for adjusting the distance between the driven pulley 23 and the driving pulley 22. With the mechanism, the driven pulley 23 applies a certain degree of tension to the timing belt 24.

When the timing belt 24 performs a feeding operation by the driving of the first motor 8, the carriage 21 reciprocates in the first direction A. For example, as illustrated in FIG. 6, the amount and speed of movement of the carriage 21 are controlled based on an encoder value that is output by an encoder sensor 10 mounted on the carriage 21 when the encoder sensor 10 detects a mark of an encoder sheet 11.

As illustrated in FIG. 7, the carriage 21 mounts three heads 1 including heads 1A, 1B, and 1C. In FIG. 7, the carriage 21 viewed from the print medium M facing the carriage 21 is illustrated. The heads 1 discharge the ink onto the print medium M.

Specifically, a head 1A includes one each of a nozzle row 1Ay, a nozzle row 1Ac, a nozzle row 1Am, and a nozzle row 1Ak. In the nozzle row 1Ay, a plurality of nozzles that discharge yellow (Y) ink is arranged. In the nozzle row 1Ac, a plurality of nozzles that discharge cyan (C) ink is arranged. In the nozzle row 1Am, a plurality of nozzles that discharge magenta (M) ink is arranged. In the nozzle row 1Ak, a plurality of nozzles that discharge black (K) ink is arranged. Similarly, a head 1B includes one each of a nozzle row 1By, a nozzle row 1Bc, a nozzle row 1Bm, and a nozzle row 1Bk and a head 1C includes one each of a nozzle row 1Cy, a nozzle row 1Cc, a nozzle row 1Cm, and a nozzle row 1Ck. The three heads 1 are supported by the carriage 21 such that the nozzles face the print medium M.

The heads 1A, 1B, and 1C are arranged side by side in the first direction A and the second direction B, respectively. With such an arrangement, the printing apparatus 100 can form an image in a wide area of the print medium M in one movement of the carriage 21 in the first direction A.

In FIG. 5, cartridges 9 from which ink is supplied to the three heads 1 are not mounted on the carriage 21, but are arranged at predetermined positions inside the printing apparatus 100. The cartridges 9 are coupled to each of the three heads 1 through pipes. The ink is supplied from the cartridges 9 to each of the three heads 1 through the pipes.

On the side opposite the cartridges 9 in the first direction A across the carriage 21, a maintenance mechanism 12 that maintains the reliability of the three heads 1 is arranged. The maintenance mechanism 12 cleans and caps the discharge faces of the three heads 1 and discharges unnecessary ink from the three heads 1.

As illustrated in FIG. 8, the print medium M is placed on the receptacle 3. Thus, the receptacle 3 supports the print medium M according to the present embodiment. The receptacle 3 is a box-shaped component having a placement face 31 facing the three heads 1. The print medium M is placed on the placement face 31. The receptacle 3 has a plurality of through holes penetrating in a direction substantially orthogonal to the placement face 31. The printing apparatus 100 activates a suction fan 13 disposed inside the receptacle 3 to suck the print medium M to the placement face 31. Thus, the printing apparatus 100 prevents the falling of the print medium M from the receptacle 3.

The second movement mechanism 4 includes an unwinder 41, a driving roller 42, a driven roller 43, and a winder 44 to relatively move the print medium M and the three heads 1 in the second direction B intersecting the first direction A. The second movement mechanism 4 uses the driving roller 42 and the driven roller 43 to intermittently convey the print medium M unwound from the unwinder 41 to the winder 44 via the receptacle 3. Thus, the second movement mechanism 4 relatively moves the print medium M and the three heads 1.

The unwinder 41 includes a roll body that includes a hollow shaft such as a paper tube as a core around which the print medium M is wound in a roll shape. The print medium M is unwound from the roll by the rotation of the roll body.

The driving roller 42 is rotated by a second motor. The driven roller 43 is rotated in accordance with the rotation of the driving roller 42. The printing apparatus 100 conveys the print medium M sandwiched between the driving roller 42 and the driven roller 43.

The winder 44 includes a hollow shaft such as a paper tube as a core. Since the leading end of the print medium M adheres to the hollow shaft with, for example, an adhesive such as tape, the winder 44 can wind the print medium M around the hollow shaft.

In the printing apparatus 100, the conveyance of the print medium M by the second movement mechanism 4 is guided by a sheet feeding guide 14 and a sheet ejection guide 15 that are respectively disposed upstream and downstream from the receptacle 3 in the second direction B.

### Hardware Configuration of Control Apparatus

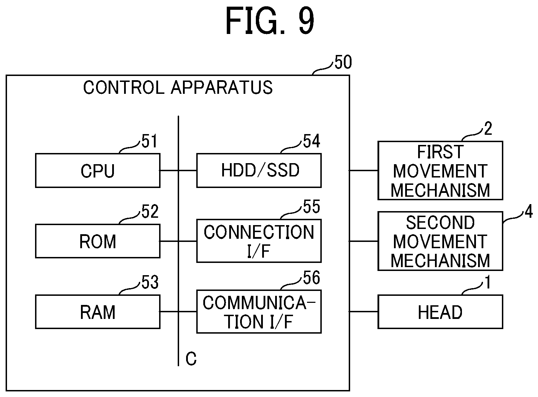

With reference to FIG. 9, a hardware configuration of a control apparatus 50 that controls the printing apparatus 100 according to the present embodiment is described below. FIG. 9 is a block diagram illustrating a hardware configuration of the control apparatus 50 according to an embodiment of the present disclosure.

As illustrated in FIG. 9, the control apparatus 50 is implemented by, for example, a computer, and includes a central processing unit (CPU) 51, a read-only memory (ROM) 52, a random-access memory (RAM) 53, a hard disk drive/solid state drive (HDD/SSD) 54, a connection interface (I/F) 55, and a communication I/F 56. The CPU 51, the ROM 52, the RAM 53, the HDD/SSD 54, the connection I/F 55, and the communication I/F 56 are communicably connected to each other through a system bus C.

The CPU 51 executes control processing including various kinds of arithmetic processing. The ROM 52 stores a program such as an initial program loader (IPL) to boot the CPU 51. The RAM 53 is used as a work area for the CPU 51. The HDD/SSD 54 stores various kinds of information such as programs.

The connection I/F 55, which may be implemented by an interface circuit, is an interface for connecting the control apparatus 50 to various devices. The connection I/F 55 can be connected to, for example, a light that can irradiate ultraviolet light or a heat source that can apply heat treatment to the printing medium M.

The communication I/F 56, which may be implemented by an interface circuit, is an interface for communicating with external apparatuses via, for example, a communication network. For example, the control apparatus 50 can receive print data, which is the source of an image to be formed on the print medium M, from the image processing apparatus 300 or the like via the communication I/F 56.

At least a part of the functions implemented by the programs executed by the CPU 51 may be implemented by an electric circuit or an electronic circuit.

### Hardware Configuration of Computer

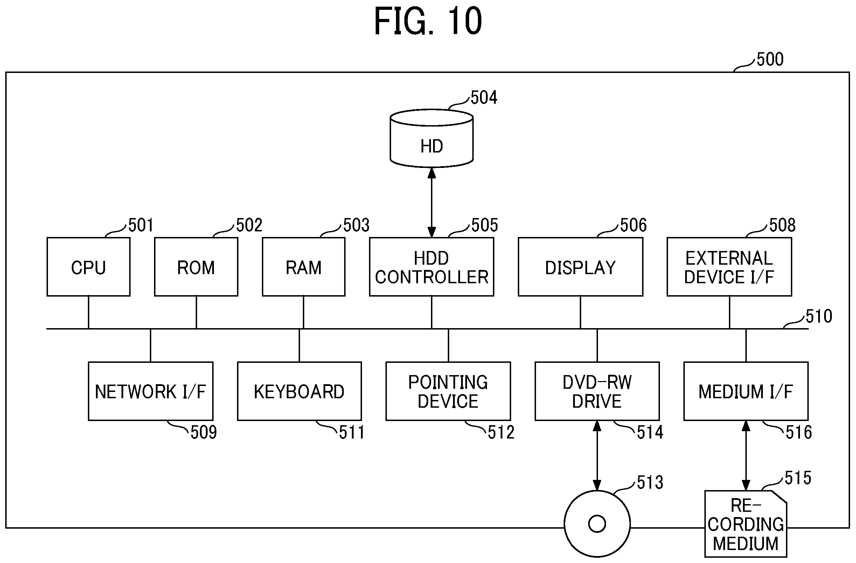

Each of the scanning apparatus 200 and the image processing apparatus 300 according to the present embodiment may be implemented by a computer. FIG. 10 is a block diagram illustrating a hardware configuration of a computer 500 according to an embodiment of the present disclosure.

As illustrated in FIG. 10, the computer 500 includes a CPU 501, a ROM 502, a RAM 503, a hard disk (HD) 504, a hard disk drive (HDD) controller 505, a display 506, an external device I/F 508, a network I/F 509, a bus line 510, a keyboard 511, a pointing device 512, a digital versatile disc-rewritable (DVD-RW) drive 514, and a medium I/F 516.

The CPU 501 controls the entire operation of the computer 500. The ROM 502 stores a program such as an IPL to boot the CPU 501. The RAM 503 is used as a work area for the CPU 501. The HD 504 stores various data such as a program. The HDD controller 505 controls the reading and writing of data from and to the HD 504 under the control of the CPU 501.

The display 506 displays various information such as a cursor, a menu, a window, characters, and images. The external device I/F 508, which may be implemented by an interface circuit, is an interface that controls communication of data with various external devices. Examples of the external devices in this case include, but are not limited to, a universal serial bus (USB) memory and a printer. The network I/F 509, which may be implemented by an interface circuit, is an interface that controls communication of data through the communication network N. The bus line 510 is, for example, an address bus or a data bus, which electrically connects the components or elements such as the CPU 501 illustrated in FIG. 10 to each other.

The keyboard 511 serves as an input device provided with a plurality of keys used for, for example, inputting characters, numerical values, and various instructions. The pointing device 512 serves as an input device used for, for example, selecting or executing various instructions, selecting an object to be processed, and moving a cursor being displayed. When the display 506 is a display operable through a touch panel, a touch operation may be used as the input means. The DVD-RW drive 514 controls the reading and writing of various data from and to a DVD-RW 513, which serves as a removable recording medium according to the present embodiment. The removable recording medium is not limited to a DVD-RW and may be, for example, a digital versatile disc-recordable (DVD-R). The medium I/F 516 controls the reading and writing (storing) of data from and to a recording medium 515 such as a flash memory.

### Functional Configuration of Printing System

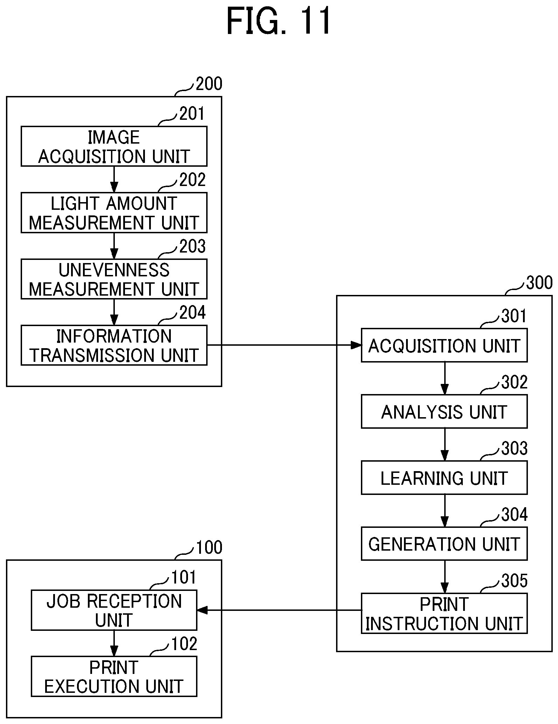

With reference to FIG. 11, a functional configuration of the printing system 1000 according to the present embodiment is described below. FIG. 11 is a block diagram illustrating a functional configuration of the printing system 1000 according to an embodiment of the present disclosure.

### Scanning Apparatus

As illustrated in FIG. 11, the scanning apparatus 200 includes an image acquisition unit 201, a light amount measurement unit 202, an unevenness measurement unit 203, and an information transmission unit 204.

The image acquisition unit 201, the light amount measurement unit 202, the unevenness measurement unit 203, and the information transmission unit 204 are implemented by, for example, processing executed by the CPU 501 that operates in cooperation with the network I/F 509 according to a program loaded from the ROM 502 to the RAM 503 illustrated in FIG. 10.

The image acquisition unit 201 acquires a wallpaper image obtained by imaging the target wallpaper. The image acquisition unit 201 may image a part of the target wallpaper. The part of the target wallpaper to be imaged includes the area to be repaired (i.e., the area where the wallpaper is replaced). In addition, the part of the target wallpaper to be imaged may include an area not including the area to be repaired.

The image of the area to be repaired is needed so that when the wallpaper is replaced with other wallpaper, the peripheral areas of the other wallpaper can be coupled to the wallpaper surrounding the other wallpaper without causing a sense of incongruity. The image of the area not including the area to be repaired is used to learn the tendency of deterioration. As the area of the wallpaper to be imaged is large, the amount of learning data available for learning the tendency of deterioration increases. Thus, the deterioration can be reproduced more accurately. In the present embodiment, the wallpaper is imaged so that the area to be imaged includes at least one repeat of the design in the vertical and horizontal directions.

The data format of the wallpaper image may be any format. In the present embodiment, since the wallpaper image is not enlarged or reduced, the wallpaper image may be in a bitmap format, for example. According to the bitmap format, since pixels and colors are associated with each other, coordinates and the colors can be easily associated with each other.

The light amount measurement unit 202 measures the amount of light irradiated to the target wallpaper. The light amount measurement unit 202 may measure the amount of light in a part of the target wallpaper. The part of the target wallpaper where the amount of light is measured may be the area to be repaired or the area not including the area to be repaired. However, when the amount of light is measured in the area not including the area to be repaired, it is preferable that the amount of light in the area not including the area to be repaired is substantially equal to the amount of light in the area to be repaired. The amount of light to be measured may be the amount of light of natural light entering through a window or the amount of light from a lighting installed in a room.

The light amount measurement unit 202 may acquire the time elapsed since the target wallpaper is pasted. For example, the light amount measurement unit 202 may acquire the elapsed time input to the scanning apparatus 200 by an operator.

The unevenness measurement unit 203 measures the unevenness of the target wallpaper. The unevenness measurement unit 203 may measure the unevenness of a part of the target wallpaper. The part of the target wallpaper for which the unevenness is measured may be the area to be repaired or the area not including the area to be repaired.

The information transmission unit 204 generates measurement information based on the measurement result measured by the light amount measurement unit 202 and the measurement result measured by the unevenness measurement unit 203. The measurement information includes light amount information indicating the amount of light irradiated to the target wallpaper and unevenness information indicating the unevenness of the target wallpaper. Since the amount of ultraviolet light can be estimated from the amount of light irradiated to the wallpaper, the light amount information is an example of the ultraviolet light information. When the elapsed time is input by the light amount measurement unit 202, the information transmission unit 204 includes the elapsed time input by the operator in the measurement information. The information transmission unit 204 transmits the wallpaper image acquired by the image acquisition unit 201 and the measurement information to the image processing apparatus 300.

### Image Processing Apparatus

As illustrated in FIG. 11, the image processing apparatus 300 includes an acquisition unit 301, an analysis unit 302, a learning unit 303, a generation unit 304, and a print instruction unit 305.

The acquisition unit 301, the analysis unit 302, the learning unit 303, the generation unit 304, and the print instruction unit 305 are implemented by, for example, processing executed by the CPU 501 that operates in cooperation with the network I/F 509 according to a program loaded from the ROM 502 to the RAM 503 illustrated in FIG. 10.

The acquisition unit 301 acquires a wallpaper image obtained by imaging the target wallpaper and measurement information obtained by measuring the target wallpaper. The acquisition unit 301 may receive the wallpaper image and the measurement information from the scanning apparatus 200 to acquire the wallpaper image and the measurement information. The acquisition unit 301 may acquire the wallpaper image and the measurement information input to the image processing apparatus 300 by the operator.

The analysis unit 302 analyzes the deterioration of the target wallpaper based on the wallpaper image and the measurement information acquired by the acquisition unit 301. The deterioration to be analyzed includes ultraviolet deterioration and wear deterioration. The analysis unit 302 analyzes the ultraviolet deterioration of the target wallpaper based on the light amount information included in the measurement information. The analysis unit 302 analyzes the wear deterioration of the target wallpaper based on the wallpaper image and the unevenness information included in the measurement information.

The learning unit 303 learns the tendency of deterioration based on the analysis result analyzed by the analysis unit 302. The learning unit 303 may calculate, for example, the color, shape, and size of the deterioration, and the distribution of the color, shape, and size of the deterioration, for each type of deterioration. The learning unit 303 may learn the tendency of deterioration for each of the areas obtained by dividing the target image into a plurality of areas.

The generation unit 304 generates a reproduced wallpaper image based on the analysis result analyzed by the analysis unit 302 and the tendency of deterioration learned by the learning unit 303. Specifically, the generation unit 304 removes deterioration from the wallpaper image based on the analysis result to generate a reproduced wallpaper image.

Further, the generation unit 304 adds a deterioration pattern generated based on the tendency of deterioration to the reproduced wallpaper image to generate a print image. Specifically, the generation unit 304 randomly generates a deterioration pattern indicating, for example, the position, color, shape, and size of the deterioration, and the distribution of the position, color, shape, and size of the deterioration, for each type of deterioration according to the tendency of deterioration, and adds the deterioration pattern for each type of deterioration to the reproduced wallpaper image.

Furthermore, the generation unit 304 may generate control information for physically adding the deterioration pattern to the wallpaper on which the print image has been formed. In this case, the generation unit 304 may use the reproduced wallpaper image as it is as the print image without adding the deterioration pattern to the reproduced wallpaper image.

The print instruction unit 305 instructs the printing apparatus 100 to print the print image generated by the generation unit 304. The print instruction unit 305 may generate a print job that includes the print image and transmit the print job to the printing apparatus 100. The print job may include the control information used for physically reproducing the deterioration.

### Printing Apparatus

As illustrated in FIG. 11, the printing apparatus 100 includes a job reception unit 101 and a print execution unit 102.

The job reception unit 101 and the print execution unit 102 are implemented by, for example, processing executed by the CPU 51 that operates in cooperation with the communication I/F 56 according to a program loaded from the ROM 52 to the RAM 53 illustrated in FIG. 9.

The job reception unit 101 receives the print job from the image processing apparatus 300. The print job includes the print image to be formed on a print medium.

The print execution unit 102 forms the print image on the print medium based on the print job received by the job reception unit 101. The print execution unit 102 controls the head 1, the first movement mechanism 2, and the second movement mechanism 4 to form the print image on the print medium M set in the printing apparatus 100.

In the case where the print job includes the control information, the print execution unit 102 may physically add the deterioration pattern to the printed wallpaper. In the case where the control information includes information for adding damage, the print execution unit 102 executes processing to form, for example, a cut, peeling, or a tear in the printed wallpaper. In the case where the control information includes information for adding stain, the print execution unit 102 executes, for example, processing to apply heat or discharge liquid to the printed wallpaper. In the case where the control information includes information for adding ultraviolet deterioration, the print execution unit 102 executes, for example, processing to irradiate ultraviolet light to the printed wallpaper.

### Details of Functional Configuration of Image Processing Apparatus

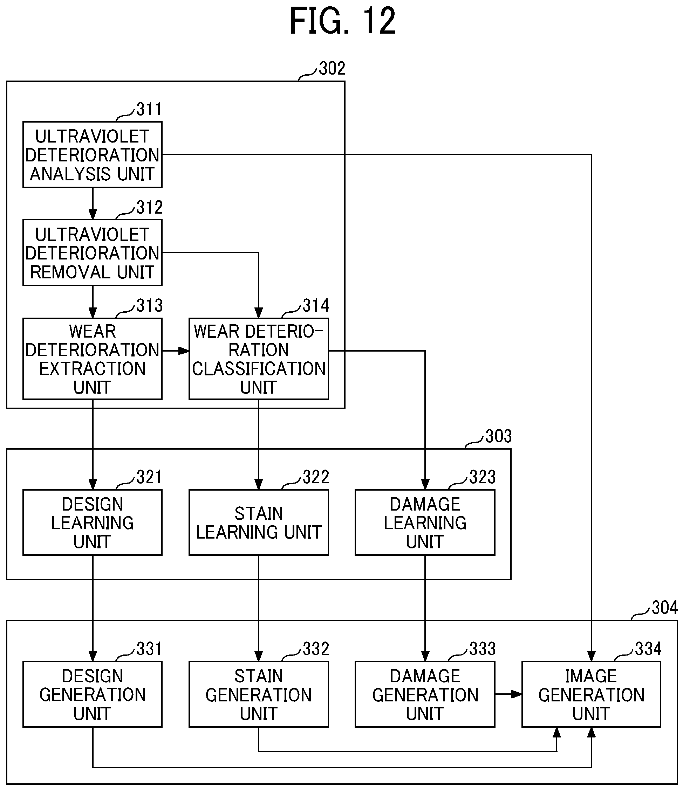

With reference to FIG. 12, a functional configuration of the image processing apparatus 300 according to the present embodiment is described in detail below. FIG. 12 is a block diagram illustrating functional configurations of the analysis unit, the learning unit, and the generation unit, according to an embodiment of the present disclosure.

### Analysis Unit

As illustrated in FIG. 12, the analysis unit 302 includes an ultraviolet deterioration analysis unit 311, an ultraviolet deterioration removal unit 312, a wear deterioration extraction unit 313, and a wear deterioration classification unit 314.

The ultraviolet deterioration analysis unit 311 analyzes the ultraviolet deterioration of the target wallpaper based on the light amount information included in the measurement information. Specifically, the ultraviolet deterioration analysis unit 311 calculates the accumulated amount of ultraviolet light irradiated to the target wallpaper based on the light amount information. Subsequently, the ultraviolet deterioration analysis unit 311 generates data (also referred to as "ultraviolet data" in the following description) in which the coordinates of the wallpaper image and the accumulated amount of ultraviolet light are mapped based on the wallpaper image and the accumulated amount of ultraviolet light.

The accumulated amount of ultraviolet light can be calculated by multiplying the amount of light measured from the target wallpaper by the time elapsed since the wallpaper is pasted. The elapsed time may be input by the operator. Note that in the case where a device that can measure the amount of ultraviolet light contained in the wallpaper is available, the accumulated amount of ultraviolet light measured by such a device may be used.

The ultraviolet deterioration removal unit 312 removes ultraviolet deterioration from the wallpaper image based on the ultraviolet data generated by the ultraviolet deterioration analysis unit 311. Specifically, the ultraviolet deterioration removal unit 312 generates data (also referred to as "wallpaper data" in the following description) in which the color shown in the wallpaper image and the depth indicated by the unevenness information are mapped according to the coordinates, based on the wallpaper image and the unevenness information. Subsequently, the ultraviolet deterioration removal unit 312 executes an inverse conversion of the color change due to the ultraviolet deterioration on the color of each coordinates indicated in the wallpaper data based on the ultraviolet data.

The color change due to the ultraviolet deterioration can be specified from the accumulated amount of ultraviolet light based on, for example, a deterioration amount calculation rule determined in advance. The deterioration amount calculation rule is a rule that indicates the relationship between the accumulated amount of ultraviolet light and the color change due to irradiation of ultraviolet light. The deterioration amount calculation rule may be determined in advance based on the color change that occurs when the wallpaper is actually irradiated with the ultraviolet light.

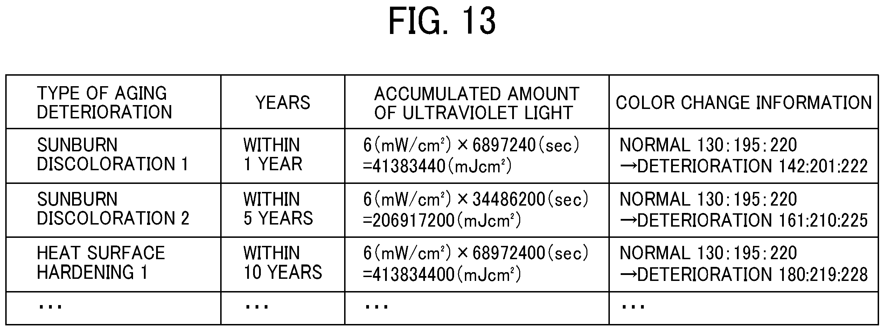

FIG. 13 is a diagram illustrating the deterioration amount calculation rule according to an embodiment of the present disclosure. As illustrated in FIG. 13, the deterioration amount calculation rule includes, for example, a type of aging deterioration, years (the number of years), an accumulated amount of ultraviolet light, and color change information.

The type of aging deterioration is information indicating the type of deterioration such as discoloration due to sunburn or surface hardening due to heat. The type of aging deterioration may be selected according to the environment in which the wallpaper is pasted. For example, in the case of wallpaper pasted on a wall that is easily exposed to sunlight directly, the type of aging deterioration indicating discoloration due to sunburn may be selected. As another example, in the case of wallpaper pasted on a wall in a space where the temperature is likely to rise, the type of aging deterioration indicating surface hardening due to heat may be selected.

The number of years is the time (in years) elapsed since the wallpaper is pasted. The number of years may be selected according to the elapsed time that is input by the operator and included in the measurement information.

The accumulated amount of ultraviolet light is an accumulated amount of ultraviolet light calculated based on the number of years. The accumulated amount of ultraviolet light illustrated in FIG. 13 is an amount of ultraviolet light calculated based on the ultraviolet intensity (60W/m²) of sunlight and the average value (1915.9 hours) of annual hours of sunshine in Japan.

The color change information is information indicating the relationship between the original color (the color at the time of manufacturing) and the color after deterioration. The color change information illustrated in FIG. 13 is set so that the yellow color becomes intense as the ultraviolet deterioration progresses, assuming that the ultraviolet deterioration progresses as the accumulated amount of ultraviolet light increases. The color change information illustrated in FIG. 13 is represented in red, green, and blue (RGB) values, but the color change information may be represented in, for example, cyan, magenta, yellow, and black (CMYK) values.

The wear deterioration extraction unit 313 extracts wear deterioration based on the wallpaper data from which the ultraviolet deterioration has been removed by the ultraviolet deterioration removal unit 312. Specifically, the wear deterioration extraction unit 313 first executes a binarization process for the wallpaper data. Subsequently, the wear deterioration extraction unit 313 executes a blob analysis on the binarized wallpaper data. In addition, the wear deterioration extraction unit 313 executes a ternary process for the wallpaper data. Subsequently, the wear deterioration extraction unit 313 executes edge detection on the ternary (trivalued) wallpaper data.

The ternary process is a process for classifying each coordinates indicated in the wallpaper data into no unevenness, unevenness due to the design of the wallpaper, or unevenness due to damage. The threshold value used for the ternary process may be set based on the average value of the depths included in the wallpaper data. In other words, in the ternary process, the coordinates indicated in the wallpaper data are classified into no unevenness in the case where the depth is near zero. In the case where the depth is equal to or greater than the threshold value, the coordinates indicated in the wallpaper data are classified into unevenness due to damage. In other cases, the coordinates indicated in the wallpaper data are classified into unevenness due to the design. By executing the edge detection on the trivalued wallpaper data, the design of the wallpaper and the damage of the wallpaper, which cannot be distinguished by the blob analysis, can be distinguished from each other.

The design of the wallpaper is information indicating the design printed on the wallpaper. The design of the wallpaper includes, for example, color information that forms the design, the background color of the wallpaper, and the concave-convex design. The concave-convex design may be, for example, a design having repetitive patterns such as tile or texture patterns, or a design having regularity but no repetitive patters such as a brick or stone pattern.

Subsequently, the wear deterioration extraction unit 313 classifies each blob extracted by the blob analysis into a blob related to design (also referred to as a "design blob" in the following description) or a blob related to wear deterioration (also referred to as a "wear blob" in the following description). Then, the wear deterioration extraction unit 313 extracts a wear blob from the wallpaper data.

The classification into the design blob or the wear blob is performed based on the frequency of appearance of a blob. For example, a blob that appears frequently may be classified into the design blob, and a blob that appears less frequently may be classified into the wear blob. The result of the edge detection may be used for the classification into the design blob or the wear blob. For example, based on the result of the edge detection, a case where the design and the damage overlap each other or a case where the design and the stain overlap each other may be separated. If big data of stain or damage is available, the classification into the design blob or the wear blob may be performed based on the big data.

The wear deterioration classification unit 314 classifies the wear blob extracted by the wear deterioration extraction unit 313 into a blob related to stain (also referred to as "stain blob" in the following description) or a blob related to damage (also referred to as "damage blob" in the following description). The result of the edge detection may be used for the classification into the stain blob or the damage blob. For example, a blob in which an edge is detected may be classified into the damage blob, and a blob in which no edge is detected may be classified into the stain blob. The wear deterioration classification unit 314 extracts, based on the result of the classification into the stain blob or the damage blob, a stain blob and a damage blob from the wallpaper data from which the ultraviolet deterioration has been removed.

### Learning Unit

As illustrated in FIG. 12, the learning unit 303 includes a design learning unit 321, a stain learning unit 322, and a damage learning unit 323.

The design learning unit 321 removes the wear blob extracted by the wear deterioration extraction unit 313 of the analysis unit 302 from the wallpaper data from which the ultraviolet deterioration has been removed by the ultraviolet deterioration removal unit 312 of the analysis unit 302. Subsequently, the design learning unit 321 learns the tendency of design of the target wallpaper based on the wallpaper data from which the wear blob has been removed. For example, the design learning unit 321 calculates the position, color, shape, and size of the design blob, and the distribution of the position, color, shape, and size of the design blob, for each design blob.

The design learning unit 321 may correct the part where the wear blob has been removed and then learn the tendency of design. For example, depending on the shape or size of the wear deterioration, the design of the wallpaper may disappear after the wear blob is removed. By learning the tendency of design based on the wallpaper data obtained by correcting the part where the wear blob has been removed, the tendency of design can be learned more accurately. In this case, considering the risk of model autophagy disorder, it is preferable that the weight for learning the corrected part is reduced. The model autophagy disorder refers to deterioration in image quality and visual diversity when an artificial intelligence (AI) model is trained with synthetic data.

The stain learning unit 322 learns the tendency of stain of the target wallpaper based on the stain blob extracted by the wear deterioration classification unit 314 of the analysis unit 302. For example, the stain learning unit 322 calculates the position, color, shape, and size of the stain blob, and the distribution of the position, color, shape, and size of the stain blob, for each stain blob.

The damage learning unit 323 learns the tendency of damage of the target wallpaper based on the damage blob extracted by the wear deterioration classification unit 314 of the analysis unit 302. For example, the damage learning unit 323 calculates the position, color, shape, and size of the damage blob, and the distribution of the position, color, shape, and size of the damage blob, for each damage blob.

### Generation Unit

As illustrated in FIG. 12, the generation unit 304 includes a design generation unit 331, a stain generation unit 332, a damage generation unit 333, and an image generation unit 334.

The design generation unit 331 generates a design pattern based on the tendency of design learned by the design learning unit 321 of the learning unit 303. The design pattern is information that reproduces the design of the target wallpaper. Subsequently, the design generation unit 331 generates an image that represents the design pattern. The image representing the design pattern is an image (i.e., a reproduced wallpaper image) obtained by removing the deterioration from the wallpaper image obtained by imaging the area to be repaired.

The stain generation unit 332 generates a stain pattern based on the tendency of stain learned by the stain learning unit 322 of the learning unit 303. The stain pattern is information indicating, for example, the type, shape, size, and distribution of the stain that are randomly generated according to the tendency of stain of the target wallpaper. The stain pattern is given by way of example as a deterioration pattern related to stain.

The stain generation unit 332 determines the degree of variation with which stains are added to a certain area of the target wallpaper, and generates a stain pattern in accordance with the determined degree of variation. For example, if it is known that fingerprint stains tend to be concentrated in the lower right corner of the target wallpaper, the stain generation unit 332 generates a stain pattern in which fingerprint stains are concentrated in the lower right corner.

The damage generation unit 333 generates a damage pattern based on the tendency of damage learned by the damage learning unit 323 of the learning unit 303. The damage pattern is information indicating, for example, the type, shape, size, and distribution of the damage that are randomly generated according to the tendency of damage of the target wallpaper. The damage pattern is given by way of example as a deterioration pattern related to damage.

The damage generation unit 333 determines the degree of variation with which damages are added to a certain area of the target wallpaper, and generates a damage pattern in accordance with the determined degree of variation. For example, if it is known that the target wallpaper has many scratches at a certain height, the damage generation unit 333 generates a damage pattern in which the scratches exist at the same height.

The image generation unit 334 adds stain and damage to the reproduced wallpaper image generated by the design generation unit 331, based on the stain pattern generated by the stain generation unit 332 and the damage pattern generated by the damage generation unit 333. Subsequently, the image generation unit 334 adds the ultraviolet deterioration analyzed by the ultraviolet deterioration analysis unit 311 to the reproduced wallpaper image to which the stain and the damage are added. Specifically, the image generation unit 334 acquires color change information based on the deterioration amount calculation rule, and adds color change due to ultraviolet deterioration to the color of each coordinates indicated in the reproduced wallpaper image. As a result, an image (i.e., a print image) is generated in which the deterioration is added to the reproduced wallpaper image.

### Process Performed by Printing System

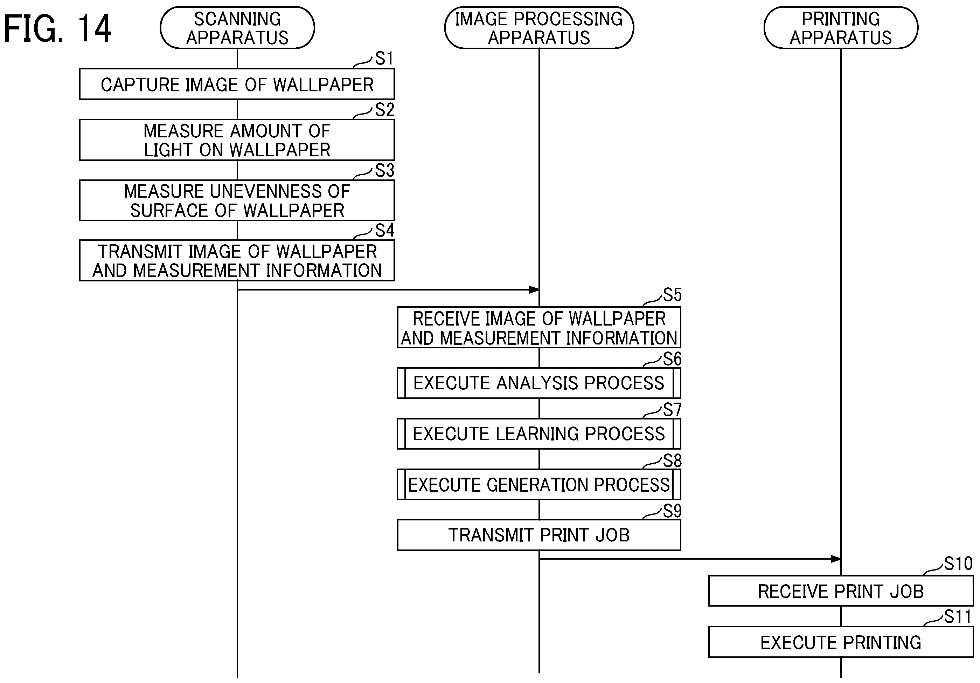

With reference to FIG. 14, a method for manufacturing wallpaper executed by the printing system 1000 is described below. FIG. 14 is a sequence diagram illustrating a method for manufacturing wallpaper according to an embodiment of the present disclosure.

In step S1, the image acquisition unit 201 of the scanning apparatus 200 images the target wallpaper. The image acquisition unit 201 generates a wallpaper image representing the imaged target wallpaper. The image acquisition unit 201 transmits the generated wallpaper image to the information transmission unit 204.

In step S2, the light amount measurement unit 202 of the scanning apparatus 200 measures the amount of light irradiated to the target wallpaper. The light amount measurement unit 202 acquires the time elapsed since the target wallpaper is pasted in response to the operation performed by the operator. The light amount measurement unit 202 transmits light amount information indicating the result of the measurement of the amount of light and the elapsed time to the information transmission unit 204.

In step S3, the unevenness measurement unit 203 of the scanning apparatus 200 measures the unevenness of the target wallpaper. The unevenness measurement unit 203 transmits unevenness information indicating the result of the measurement of the unevenness to the information transmission unit 204.

In step S4, the information transmission unit 204 of the scanning apparatus 200 receives the light amount information and the elapsed time from the light amount measurement unit 202. The information transmission unit 204 also receives the unevenness information from the unevenness measurement unit 203. The information transmission unit 204 generates measurement information that includes the light amount information, the elapsed time, and the unevenness information. The information transmission unit 204 transmits the wallpaper image and the measurement information to the image processing apparatus 300.

In step S5, the acquisition unit 301 of the image processing apparatus 300 receives the wallpaper image and the measurement information from the scanning apparatus 200. The acquisition unit 301 acquires the received wallpaper image and measurement information. The acquisition unit 301 transmits the acquired wallpaper image and measurement information to the analysis unit 302.

In step S6, the analysis unit 302 of the image processing apparatus 300 executes an analysis process. The analysis process is a process for analyzing the deterioration of the target wallpaper based on the wallpaper image and the measurement information.

### Analysis Process

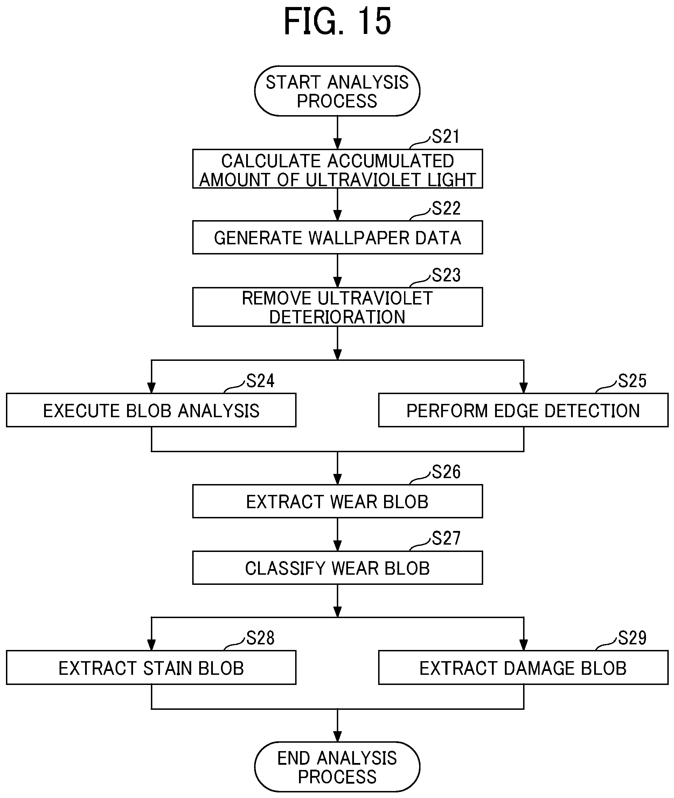

With reference to FIG. 15, the analysis process executed by the analysis unit 302 is described below. FIG. 15 is a flowchart of the analysis process according to an embodiment of the present disclosure.

In step S21, the ultraviolet deterioration analysis unit 311 of the analysis unit 302 acquires the light amount information and the elapsed time from the measurement information acquired in step S5. The ultraviolet deterioration analysis unit 311 calculates the accumulated amount of ultraviolet light irradiated to the target wallpaper based on the light amount information and the elapsed time. The ultraviolet deterioration analysis unit 311 generates ultraviolet data based on the wallpaper image and the accumulated amount of ultraviolet light. The ultraviolet deterioration analysis unit 311 transmits the generated ultraviolet data to the ultraviolet deterioration removal unit 312.

In step S22, the ultraviolet deterioration removal unit 312 of the analysis unit 302 acquires the unevenness information from the measurement information acquired in step S5. The ultraviolet deterioration removal unit 312 generates wallpaper data based on the wallpaper image and the unevenness information.

In step S23, the ultraviolet deterioration removal unit 312 of the analysis unit 302 receives the ultraviolet data from the ultraviolet deterioration analysis unit 311. The ultraviolet deterioration removal unit 312 executes an inverse conversion of the color change due to the ultraviolet deterioration on the color of each coordinates indicated in the wallpaper data based on the ultraviolet data. Thus, the ultraviolet deterioration is removed from the wallpaper data. The ultraviolet deterioration removal unit 312 transmits the wallpaper data from which the ultraviolet deterioration has been removed to the wear deterioration extraction unit 313. The ultraviolet deterioration removal unit 312 also transmits the wallpaper data from which the ultraviolet deterioration has been removed to the learning unit 303.

In step S24, the wear deterioration extraction unit 313 of the analysis unit 302 receives the wallpaper data from the ultraviolet deterioration removal unit 312. The wear deterioration extraction unit 313 executes a binarization process for the wallpaper data. The wear deterioration extraction unit 313 executes a blob analysis on the binarized wallpaper data.

In step S25, the wear deterioration extraction unit 313 of the analysis unit 302 executes a ternary process for the wallpaper data. The wear deterioration extraction unit 313 executes edge detection on the ternary (trivalued) wallpaper data.

In step S26, the wear deterioration extraction unit 313 of the analysis unit 302 classifies each blob extracted in step S24 into a design blob or a wear blob. The wear deterioration extraction unit 313 extracts a wear blob from the wallpaper data (i.e., the wallpaper data from which the ultraviolet deterioration has been removed) received in step S24. The wear deterioration extraction unit 313 transmits information indicating the extracted wear blob to the wear deterioration classification unit 314. The wear deterioration extraction unit 313 also transmits information indicating the extracted wear blob to the learning unit 303. The information indicating the wear blob is, for example, information indicating the position, size, shape, and the like of each wear blob.

In step S27, the wear deterioration classification unit 314 of the analysis unit 302 receives the information indicating the wear blob from the wear deterioration extraction unit 313. The wear deterioration classification unit 314 classifies the wear blob into a stain blob or a damage blob based on each edge detected in step S25.

In step S28, the wear deterioration classification unit 314 of the analysis unit 302 extracts, from the wallpaper data received in step S24, the blob that has been classified into the stain blob in step S27. The wear deterioration classification unit 314 transmits information indicating the extracted stain blob to the learning unit 303. The information indicating the stain blob is, for example, information indicating the position, size, shape, and the like of each stain blob.

In step S29, the wear deterioration classification unit 314 of the analysis unit 302 extracts, from the wallpaper data received in step S24, the blob that has been classified into the damage blob in step S27. The wear deterioration classification unit 314 transmits information indicating the extracted damage blob to the learning unit 303. The information indicating the damage blob is, for example, information indicating the position, size, shape, and the like of each damage blob.

Returning to FIG. 14, the description continues. In step S7, the learning unit 303 of the image processing apparatus 300 executes a learning process. The learning process is a process for learning the tendency of deterioration based on the analysis result of the analysis process.

### Learning Process

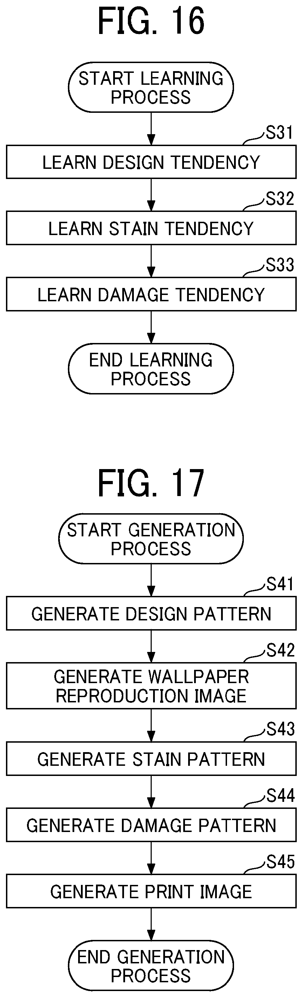

With reference to FIG. 16, the learning process executed by the learning unit 303 is described below. FIG. 16 is a flowchart of the learning process according to an embodiment of the present disclosure.

In step S31, the design learning unit 321 of the learning unit 303 receives, from the ultraviolet deterioration removal unit 312, the wallpaper data from which the ultraviolet deterioration has been removed. The design learning unit 321 also receives the information indicating the wear blob from the wear deterioration extraction unit 313. The design learning unit 321 removes the wear blob from the wallpaper data from which the ultraviolet deterioration has been removed.

The design learning unit 321 learns the tendency of design of the target wallpaper based on the wallpaper data from which the wear blob has been removed. The design learning unit 321 transmits information indicating the tendency of design to the generation unit 304. The information indicating the tendency of design may include, for example, the position, color, shape, and size of the design, and the distribution of the position, color, shape, and size of the design.

In step S32, the stain learning unit 322 of the learning unit 303 receives the information indicating the stain blob from the wear deterioration extraction unit 313. The stain learning unit 322 learns the tendency of stain of the target wallpaper based on the information indicating the stain blob. The stain learning unit 322 transmits information indicating the tendency of stain to the generation unit 304. The information indicating the tendency of stain may include, for example, the position, color, shape, and size of the stain, and the distribution of the position, color, shape, and size of the stain.

In step S33, the damage learning unit 323 of the learning unit 303 receives the information indicating the damage blob from the wear deterioration extraction unit 313. The damage learning unit 323 learns the tendency of damage of the target wallpaper based on the information indicating the damage blob. The damage learning unit 323 transmits information indicating the tendency of damage to the generation unit 304. The information indicating the tendency of damage may include, for example, the position, color, shape, and size of the damage, and the distribution of the position, color, shape, and size of the damage.

Returning to FIG. 14, the description continues. In step S8, the generation unit 304 of the image processing apparatus 300 executes a generation process. The generation process is a process for generating a print image based on the analysis result of the analysis process and the tendency of deterioration learned in the learning process.

### Generation Process

With reference to FIG. 17, the generation process executed by the generation unit 304 is described below. FIG. 17 is a flowchart of the generation process according to an embodiment of the present disclosure.

In step S41, the design generation unit 331 of the generation unit 304 receives the information indicating the tendency of design from the design learning unit 321. The design generation unit 331 generates a design pattern based on the tendency of design.

In step S42, the design generation unit 331 of the generation unit 304 generates a reproduced wallpaper image that indicates the design pattern generated in step S41. The design generation unit 331 transmits the generated reproduced wallpaper image to the image generation unit 334.

In step S43, the stain generation unit 332 of the generation unit 304 receives the information indicating the tendency of stain from the stain learning unit 322. The stain generation unit 332 generates a stain pattern based on the tendency of stain. The stain generation unit 332 transmits the generated stain pattern to the image generation unit 334.

In step S44, the damage generation unit 333 of the generation unit 304 receives the information indicating the tendency of damage from the damage learning unit 323. The damage generation unit 333 generates a damage pattern based on the tendency of damage. The damage generation unit 333 transmits the generated damage pattern to the image generation unit 334.

In step S45, the image generation unit 334 of the generation unit 304 receives the reproduced wallpaper image from the design generation unit 331. The image generation unit 334 also receives the stain pattern from the stain generation unit 332. The image generation unit 334 also receives the damage pattern from the damage generation unit 333. The image generation unit 334 also receives the ultraviolet data from the ultraviolet deterioration analysis unit 311.

The image generation unit 334 adds stain and damage to the reproduced wallpaper image based on the stain pattern and the damage pattern. The image generation unit 334 also adds, based on the ultraviolet data, color change due to ultraviolet deterioration to the reproduced wallpaper image to which the stain and damage have been added. As a result, a print image is generated in which deterioration is added to the reproduced wallpaper image. The image generation unit 334 transmits the generated print image to the print instruction unit 305.

Returning to FIG. 14, the description continues. In step S9, the print instruction unit 305 of the image processing apparatus 300 receives the print image from the generation unit 304. The print instruction unit 305 generates a print job that includes the received print image. The print instruction unit 305 transmits the generated print job to the printing apparatus 100.

In step S10, the job reception unit 101 of the printing apparatus 100 receives the print job from the image processing apparatus 300. The job reception unit 101 receives the received print job. The job reception unit 101 transmits the print job to the print execution unit 102.

In step S11, the print execution unit 102 of the printing apparatus 100 receives the print job from the job reception unit 101. The print execution unit 102 forms the print image on a print medium based on the received print job. In the case where the print job includes control information, the print execution unit 102 physically reproduces the deterioration pattern on the printed wallpaper based on the control information.

The image processing apparatus 300 according to the present embodiment analyzes the deterioration of the wallpaper based on the measurement information obtained by measuring the wallpaper, and generates a reproduced wallpaper image by removing the deterioration from the wallpaper image obtained by imaging the wallpaper. The reproduced wallpaper image is an image reproducing the design of the existing wallpaper. In one aspect, according to the present embodiment, an image of wallpaper that harmonizes with existing wallpaper can be generated.

The image processing apparatus 300 may analyze the ultraviolet deterioration of the wallpaper based on the ultraviolet information indicating the amount of ultraviolet light irradiated to the wallpaper, and generate a reproduced wallpaper image by removing the ultraviolet deterioration from the wallpaper image. According to the present embodiment, an image reproducing the design of existing wallpaper can be generated from the wallpaper having deterioration due to ultraviolet light.

The image processing apparatus 300 may add color change due to ultraviolet deterioration to the reproduced wallpaper image based on the analysis result of ultraviolet deterioration. According to the present embodiment, an image of wallpaper that harmonizes with existing wallpaper having deterioration due to wear can be generated.

The image processing apparatus 300 may analyze wear deterioration of the wallpaper based on the unevenness information obtained by measuring the unevenness of the wallpaper, and generate a reproduced wallpaper image by removing the wear deterioration from the wallpaper image. According to the present embodiment, an image reproducing the design of existing wallpaper can be generated from the wallpaper having deterioration due to wear.

The image processing apparatus 300 may learn the tendency of wear based on the analysis result of wear, and may add wear deterioration to the reproduced wallpaper image based on the deterioration pattern generated based on the tendency of wear. According to the present embodiment, an image of wallpaper that harmonizes with existing wallpaper having deterioration due to wear can be generated.

Furthermore, the present embodiment allows contribution to the achievement of the sustainable development goals (SDGs) set by the United Nations. When replacing wallpaper having the aging deterioration, it has been conventionally common practice to replace the wallpaper on the entire surface of a wall in order to finish the wallpaper in a natural appearance that does not cause a sense of incongruity. The wallpaper manufactured according to the present embodiment harmonizes with existing wallpaper. Accordingly, even if only the area that needs to be repaired is replaced with the wallpaper, the wallpaper can be finished without causing a sense of incongruity. Thus, the amount of wallpaper required for repair can be reduced. As a result, the present embodiment allows contribution to ensuring the sustainable consumption and production, and the sustainable management of forests, as set out in the sustainable development goals.

Each of the functions of the embodiments described above may be implemented by one or more processing circuits or circuitry. Processors are considered processing circuitry or circuitry as they include transistors and other circuitry therein. In the disclosure, the circuitry, units, or means are hardware that carry out or are programmed to perform the recited functionality. The hardware may be any hardware disclosed herein which is programmed or configured to carry out the recited functionality. There is a memory that stores a computer program which includes computer instructions. These computer instructions provide the logic and routines that enable the hardware (e.g., processing circuitry or circuitry) to perform the method disclosed herein. This computer program can be implemented in known formats as a computer-readable storage medium, a computer program product, a memory device, a record medium such as a compact disc-read-only memory (CD-ROM) or digital versatile disc (DVD), and/or the memory of a field programmable gate array (FPGA) or application specific integrated circuit (ASIC).

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An image processing apparatus (300) comprising:
an acquisition unit (301) configured to acquire a first image obtained by imaging wallpaper and measurement information obtained by measuring the wallpaper;
an analysis unit (302) configured to analyze deterioration of the wallpaper based on the measurement information; and
a generation unit (304) configured to generate a second image by removing the deterioration from the first image.

2. The image processing apparatus (300) according to claim 1, wherein the generation unit (304) is configured to add the deterioration to the second image based on a result obtained by analyzing the deterioration.

3. The image processing apparatus (300) according to claim 1, wherein:
the deterioration includes ultraviolet deterioration;
the acquisition unit (301) is configured to acquire the measurement information that includes ultraviolet information indicating an amount of ultraviolet light irradiated to the wallpaper;
the analysis unit (302) is configured to analyze the ultraviolet deterioration of the wallpaper based on the ultraviolet information; and
the generation unit (304) is configured to generate the second image by removing the ultraviolet deterioration from the first image.

4. The image processing apparatus (300) according to claim 3, wherein the generation unit (304) is configured to add the ultraviolet deterioration to the second image based on a result obtained by analyzing the ultraviolet deterioration.

5. The image processing apparatus (300) according to any one of claims 1 to 4, wherein:
the deterioration includes wear deterioration;
the acquisition unit (301) is configured to acquire the measurement information that includes unevenness information obtained by measuring unevenness of the wallpaper;
the analysis unit (302) is configured to analyze the wear deterioration of the wallpaper based on the unevenness information; and
the generation unit (304) is configured to generate the second image by removing the wear deterioration from the first image.

6. The image processing apparatus (300) according to claim 5 further comprising a learning unit (303) configured to learn a tendency of wear deterioration of the wallpaper based on a result obtained by analyzing the wear deterioration,
wherein the generation unit (304) is configured to add the wear deterioration to the second image based on the tendency of wear deterioration.

7. A computer-implemented image processing method, the method comprising:
acquiring (S5) a first image obtained by imaging wallpaper and measurement information obtained by measuring the wallpaper;
analyzing (S6) deterioration of the wallpaper based on the measurement information; and
generating (S22, S23) a second image by removing the deterioration from the first image.

8. A carrier medium carrying computer readable code that, when executed by a computer system, causes the computer system to carry out a method, the method comprising:
acquiring (S5) a first image obtained by imaging wallpaper and measurement information obtained by measuring the wallpaper;
analyzing (S6) deterioration of the wallpaper based on the measurement information; and
generating (S22, S23) a second image by removing the deterioration from the first image.

## Patentansprüche

1. Bildverarbeitungseinrichtung (300), umfassend:
eine Erfassungseinheit (301), welche dazu konfiguriert ist, ein erstes Bild, welches durch Abbilden einer Tapete erhalten wird, und Maßinformationen, welche durch Messen der Tapete erhalten werden, zu erfassen;
eine Analyseeinheit (302), welche dazu konfiguriert ist, Abnutzung der Tapete basierend auf den Maßinformationen zu analysieren; und
eine Generierungseinheit (304), welche dazu konfiguriert ist, ein zweites Bild zu generieren, indem sie die Abnutzung aus dem ersten Bild entfernt.

2. Bildverarbeitungseinrichtung (300) nach Anspruch 1, wobei die Generierungseinheit (304) dazu konfiguriert ist, die Abnutzung basierend auf einem durch Analyse der Abnutzung erhaltenen Ergebnis zu dem zweiten Bild hinzuzufügen.

3. Bildverarbeitungseinrichtung (300) nach Anspruch 1, wobei:
die Abnutzung ultraviolette Abnutzung beinhaltet;
die Erfassungseinheit (301) dazu konfiguriert ist, die Maßinformationen zu erfassen, welche ultraviolette Informationen beinhalten, welche eine Menge des auf die Tapete eingestrahlten ultravioletten Lichts angeben;
die Analyseeinheit (302) dazu konfiguriert ist, die ultraviolette Abnutzung der Tapete basierend auf den ultravioletten Informationen zu analysieren; und
die Generierungseinheit (304) dazu konfiguriert ist, das zweite Bild zu generieren, indem sie die ultraviolette Abnutzung aus dem ersten Bild entfernt.

4. Bildverarbeitungseinrichtung (300) nach Anspruch 3, wobei die Generierungseinheit (304) dazu konfiguriert ist, die ultraviolette Abnutzung basierend auf einem durch Analyse der ultravioletten Abnutzung erhaltenen Ergebnis zu dem zweiten Bild hinzuzufügen.

5. Bildverarbeitungseinrichtung (300) nach einem der Ansprüche 1 bis 4, wobei:
die Abnutzung Verschleißerscheinungen beinhaltet;
die Erfassungseinheit (301) dazu konfiguriert ist, die Maßinformationen zu erfassen, welche Unebenheitsinformationen beinhalten, welche durch Messen der Unebenheit der Tapete erhalten werden;
die Analyseeinheit (302) dazu konfiguriert, dass sie die Verschleißerscheinungen der Tapete basierend auf den Unebenheitsinformationen analysiert; und
die Generierungseinheit (304) dazu konfiguriert ist, das zweite Bild zu generieren, indem sie die Verschleißerscheinungen aus dem ersten Bild entfernt.

6. Bildverarbeitungseinrichtung (300) nach Anspruch 5, weiter eine Lerneinheit (303) umfassend, welche dazu konfiguriert ist, eine Tendenz zu Verschleißerscheinungen der Tapete basierend auf einem durch Analyse der Verschleißerscheinungen erhaltenen Ergebnis zu erlernen,
wobei die Generierungseinheit (304) dazu konfiguriert ist, die Verschleißerscheinungen basierend auf der Tendenz der Verschleißerscheinungen zu dem zweiten Bild hinzuzufügen.

7. Computerimplementiertes Bildverarbeitungsverfahren, wobei das Verfahren umfasst:
Erfassen (S5) eines ersten Bildes, welches durch Abbilden einer Tapete erhalten wird, und von Maßinformationen, welche durch Messen der Tapete erhalten werden;
Analysieren (S6) von Abnutzung der Tapete basierend auf den Maßinformationen; und
Generieren (S22, S23) eines zweiten Bildes durch Entfernen der Abnutzung aus dem ersten Bild.

8. Trägermedium, welches computerlesbaren Code enthält, welcher, wenn er von einem Computersystem ausgeführt wird, das Computersystem veranlasst, ein Verfahren auszuführen, wobei das Verfahren umfasst:
Erfassen (S5) eines ersten Bildes, welches durch Abbilden einer Tapete erhalten wird, und von Maßinformationen, welche durch Messen der Tapete erhalten werden;
Analysieren (S6) von Abnutzung der Tapete basierend auf den Maßinformationen; und
Generieren (S22, S23) eines zweiten Bildes durch Entfernen der Abnutzung aus dem ersten Bild.

## Revendications

1. Appareil de traitement d'image (300) comprenant :
une unité d'acquisition (301) configurée pour acquérir une première image obtenue par imagerie d'un papier peint et d'informations de mesure obtenues par mesure du papier peint ;
une unité d'analyse (302) configurée pour analyser une détérioration du papier peint sur la base des informations de mesure ; et
une unité de génération (304) configurée pour générer une seconde image par suppression de la détérioration de la première image.

2. Appareil de traitement d'image (300) selon la revendication 1, dans lequel l'unité de génération (304) est configurée pour ajouter la détérioration à la seconde image sur la base d'un résultat obtenu par analyse de la détérioration.

3. Appareil de traitement d'image (300) selon la revendication 1, dans lequel
la détérioration inclut une détérioration par ultraviolets ;
l'unité d'acquisition (301) est configurée pour acquérir les informations de mesure qui incluent des informations sur les ultraviolets indiquant une quantité de lumière ultraviolette irradiée sur le papier peint ;
l'unité d'analyse (302) est configurée pour analyser la détérioration par ultraviolets du papier peint sur la base des informations sur les ultraviolets ; et
l'unité de génération (304) est configurée pour générer la seconde image par suppression de la détérioration par ultraviolets de la première image.

4. Appareil de traitement d'image (300) selon la revendication 3, dans lequel l'unité de génération (304) est configurée pour ajouter la détérioration par ultraviolets à la seconde image sur la base d'un résultat obtenu par analyse de la détérioration par ultraviolets.

5. Appareil de traitement d'image (300) selon l'une quelconque des revendications 1 à 4, dans lequel :
la détérioration inclut une détérioration par usure ;
l'unité d'acquisition (301) est configurée pour acquérir les informations de mesure qui incluent des informations d'irrégularité obtenues par mesure d'une irrégularité du papier peint ;
l'unité d'analyse (302) est configurée pour analyser la détérioration par usure du papier peint sur la base des informations d'irrégularité ; et
l'unité de génération (304) est configurée pour générer la seconde image en supprimant la détérioration par usure de la première image.

6. Appareil de traitement d'image (300) selon la revendication 5, comprenant en outre une unité d'apprentissage (303) configurée pour apprendre une tendance de détérioration par usure du papier peint sur la base d'un résultat obtenu par analyse de la détérioration par usure,
dans lequel l'unité de génération (304) est configurée pour ajouter la détérioration par usure à la seconde image sur la base de la tendance de détérioration par usure.

7. Procédé de traitement d'image mis en œuvre par ordinateur, le procédé comprenant :
l'acquisition (S5) d'une première image obtenue par imagerie d'un papier peint et d'informations de mesure obtenues par mesure du papier peint ;
l'analyse (S6) d'une détérioration du papier peint sur la base des informations de mesure ; et
la génération (S22, S23) d'une seconde image par suppression de la détérioration de la première image.

8. Support porteur portant un code lisible par ordinateur qui, lorsqu'il est exécuté par un système informatique, amène le système informatique à réaliser un procédé, le procédé comprenant :
l'acquisition (S5) d'une première image obtenue par imagerie d'un papier peint et d'informations de mesure obtenues par mesure du papier peint ;
l'analyse (S6) d'une détérioration du papier peint sur la base des informations de mesure ; et
la génération (S22, S23) d'une seconde image par suppression de la détérioration de la première image.
